# EUROPEAN PATENT APPLICATION

(11) **EP 1 466 954 A1**
(43) Date of publication of application: **13.10.2004**
(21) Application number: 01956950.8
(22) Date of filing: 17.08.2001
(51) Int. Cl.: C09K 3/14, C01B 31/06

(54) **DIAMOND ABRASIVE MATERIAL PARTICLES AND PRODUCTION METHOD THEREFOR**

(30) Priority: 17.08.2000 JP 2000247861
(71) Applicant: THE ISHIZUKA RESEARCH INSTITUTE, LTD., Hiratsuka-shi Kanagawa 254-0012 (JP)
(72) Inventor: YAMANAKA, Hiroshi, Oyama-shi Tochigi 323-0807 (JP); OHSHIMA, Ryuji, Oyama-shi Tochigi 323-0807 (JP); ISHIZUKA, Hiroshi, Shinagawa-ku Tokyo 142-0063 (JP)
(74) Representative: Maureau, Philippe
(86) International application number: PCT/JP2001/007093
(87) International publication number: WO 2002/014452

(57) **Abstract**

One of the principal objectives is to provide a loose mass of single crystalline minute diamond particles for abrasive uses, which is prepared from a coarser crystalline product of a common static ultra high-pressure process. The novel particle abrasive can achieve improvement in both machining efficiency (stock removal per time) and worked surface roughness. An effective method for its production is also provided.

The diamond particles of the invention, which have a D50 average size of over 5 µm but not exceeding 40 µm, have an explicit effect of a heat treament on either crystal structure or collective properties. The particles are further deposited on the surface with non-diamond carbon, amounting 0.5 % or more by weight in relation to the diamond as a whole.

Such diamond particles can be effectively obtained by heating diamond particles having said D50 particle size, in a non-oxidizing environment at a treatment temperature of 600° C, in order to convert the surface of diamond particle to non-diamond carbon.

## Description

### Technical Field

This invention relates to a diamond particle abrasive and a method for the production of the same, suitable in particular for the use in the precision machining and polishing of works of such hard materials as carbide alloy, alumina and silicon carbide, as well as silicon metal and glass fibers.

### Technical Background

Recent advance in machining precision is remarkable. Dicing saws are now common, for example, that have a blade width of as thin as around 30 µm for cutting silicon wafers and needs are rising for a particle abrasive of improved performance both in precision and productivity, which would permit a higher precision finish at a higher efficiency.

In general the abrasive of micron-sized diamond particles are used in two ways: fixed in a tool such as wheels and blades or, alternatively, dispersed and suspended in medium as slurry. Recently an increasing part of diamond particles produced is directed to the application as a fixed abrasive, in order to consume the particles most usefully.

In machining process diamond particle abrasives are demanded of, first, a high machining rate, or efficient stock removal per time, and then smooth worked surface. In general those are the demands that can be very hardly achieved simultaneously.

In such circumstances the polycrystalline type abrasive is considered favorable for high precision machining processes, which consists of primary diamond particles of tens of nanometers in diameter aggregated into secondary particles of several micrometers in diameter.

However this type of abrasive is disadvantageous in that its production is based on a dynamic compression that uses much explosive under a lot of requirements and restrictions, so the resulting product is rather too expensive to be used for common applications.

It is known, on the other hand, that in abrasive applications mesh-sized diamond particles, when thermally affected, decrease more in mechanical strength than other abrasive materials. Such alteration is attributed to the occurrence of micro-cracking, or fine cracks occurring within the particles. So thermal toughness index or as-thermally-affected strength is employed for the characterization of the particles, along with the standard properties such as friability and crushing strength. A technique is also published in a Japanese patent application for the manufacture of wheels with thermally affected superabrasive particles (JP-A1-2000-158347).

### Disclosure of Invention

The principle objects of the invention are to provide an abrasive, and an effective method for its production, that would meet the above described two demands. The minute single crystalline diamond particles of the invention, deriving from a diamond product produced in a common static high-pressure compression, permit high machining rate, or efficient stock removal per time, and low worked surface roughness at the same time.

The diamond abrasive of the invention is in the form of sized loose mass of minute single crystalline particles, which has a D50 average particle size over 5 µm but not exceeding 40 µm (as observed with MICROTRAC UPA particle size analyzer). It has, in addition, a noticeable effect in individual crystal structure and/or collective property of the mass, as a result of a preceding heat treatment. Such particles are coated on the surface with non-diamond carbon that amounts 0.5 % or more by weight relative to the whole diamond.

The diamond abrasive of the invention can be effectively produced by this method, which consists another aspect of the invention: diamond particles with a D50 average size within such range are heat-treated at a treatment temperature of 600° C or more in a non-oxidizing environment, in order to partly convert the surface to non-diamond carbon.

### Preferred Embodiment of the Invention

For the process of the invention a starting material is available above all such as diamond particles converted from non-diamond carbon on a so-called "static" high-pressure compression mechanism such as press, isolated, crushed and sorted into sizes within the range.

The starting material diamond is treated in a non-oxidizing environment and, in particular, in a vacuum at a pressure of less than 10 Pa for example. Alternatively the treatment chamber may be degassed and then filled to provide an atmosphere of inert gas based on nitrogen, argon or helium. The atmosphere may also be reductive instead, using hydrogen or carbon monoxide. A secure and economic process can be achieved by filling the chamber with argon or nitrogen gas at a somewhat positive pressure over the outside atmosphere.

The effect of the heat treatment becomes significant at a temperature up from 600° C. However a temperature over 1500° C is not favorable as leading to excessive conversion to non-diamond carbon and, in particular, graphite. Preferred temperatures are within a range of 900° to 1400° C. Good results are obtained in terms of both stock removal and worked surface roughness by the heat treatment at especially 1100° to 1300° C. The temperature should be maintained for a period that depends on the volume of the batch treated, in general between 3 and 48 hours.

In the invention, as described above, the abrasive characteristics of diamond is essentially regulated in the heat treatment, whereby a diamond is partly converted on the surface to non-diamond carbon, such as graphitic, turbostratic or amorphous carbon. The proportion of non-diamond carbon should be 30 % or less relative to the whole diamond weight, as evaluated by weight loss dissolution into oxidizer solution.

The diamond abrasive of the invention yields smoother worked surface relative to conventional abrasive products of corresponding particle sizes. This is probably because the deposit of non-diamond carbon, and especially graphitic amorphous carbon, serves as a lubricating and shock-absorbing medium when the particles hit the work.

The heat-treated diamond particles of the invention also comprise within the crystal minute cracks as a result of the treatment. This may be caused by volume expansion that occurs in the conversion in part of the diamond to graphite or another type of non-diamond carbon, which can be promoted under the presence of metallic inclusion in molecules or atoms.

The heat-treated diamond particles have a crushing strength decreased by more than 10 % from the one before the treatment, because of either the above said minute cracks or unnoticeable structural alteration. That results in chipping or breakage in small areas and zones around the hitting edges, when loaded of an impulsive force. This is another feature that permits to effectively prevent or minimize the occurrence of deep abrasion marks on the work surface, in common with the first feature of the secondary particle (or polycrystalline) structure composed of finer diamond particles. Also diamond fragments can polish effectively and contribute to the production of smoother worked surface with decreased roughness.

Further a spontaneous generation of sharp edges continues by timely chipping on the particle surface, so as to perform a sustained efficient abrasion or, in other words, improved machining rate (stock removal per process time and abrasive consumption).

It is known that non-diamond carbon deposited on the surface of diamond particles can be evaluated commonly by means of wet or dry oxidization process. Non-diamond carbon in a sample is decomposed and removed selectively from the diamond, based on the difference in chemical reactivity, and the weight loss caused by the oxidization is indicated in ratio relative to the weight before the process.

In the wet process a sample is intensely heated in wet oxidizer or a solution of strong acid such as concentric sulfuric or nitric acid, their mixture, or chromic acid mixture. As non-diamond carbon has been completely removed from the surface and in cracks open to the surface, its proportion can be calculated conveniently on the basis of the difference in weight between after and before the oxidization process. In the invention the proportion of non-diamond carbon is determined and indicated in accordance with this technique of dissolution into oxidizer.

This technique of wet oxidization is also applicable, by moderating the process effect, for imparting hydrophilicity to the surface of particles of either diamond or combined body of diamond and non-diamond carbon, as heat-treated. Such step of providing hydrophilicity consists in part a variation of the invention. The term "moderate" or "mild" is used in this description in the sense that the degree of oxidization is lowered or moderated.

The improvement in friability due to the minute cracking within the particles can be first- hand evaluated for coarser particles. The technique called "pot mill" uses a specialized set of capsule and steel ball. A dose of sample diamond particles, sieve-sized in advance, is placed in said capsule and subjected to an impulsive loading for a given period of time. The sample is then collected and sieved again. The through fraction is weighed and the proportion relative to the initial sample is used to characterize the friability. Such technique is described in particular in "Diamond Tools" (Nikkei Gijutsu Tosho), page 238 (1987).

Alternatively, the parameter "toughness index", or shortly T.I., is also used, which is defined as a ratio in weight, relative to the initial sample of the stronger or tougher fraction that rests on the screen substantially uncrushed.

The heat-treated diamond particles of the invention have a crushing strength, evaluated as above, decreased and, thus, improved in friability by 10 % or more. This is probably an effect of minute cracking that occurs as a result of the heat treatment.

The diamond particles of the invention, as specifically heat-treated, are adapted and better efficiency can be achieved especially in the machining of carbide alloys, alumina, silicon carbide and silicon metal, as well as glass fibers. Such effects, it is considered, may be principally attributed to the improved friability, that is capability of being crushed under abrasive loads, improved due to the heat treatment. More specifically fresh edges, small and abundant, are generated effectively when the particles become crushed during the machining process. Although the increased friability may affect the tool service life, that is not significant in the whole process economy. Each diamond particle is more fully exploited in the cycle of edge dulling and regeneration before it becomes removed, so less proportion drop out of the tool body as dulled after having served insufficiently. Instead a more apparent effect is improvement in the productivity in terms of machining rate per process time, due to the specific free-cutting capability.

On the other hand diamond abrasive, as heat-treated, of the invention yields a worked surface roughness 80 % that achievable with the diamond abrasive of the same grade in starting condition (not heat-treated). This is due to the efficient generation of minute edges by micro cracking, which is an another effect of the heat treatment. This way a further higher machining efficiency can be achieved by employing a diamond abrasive of one size-grade larger than conventionally, in uses where usual surface roughness is allowed.

In the invention the heat treatment is carried out in a non-oxidizing environment, which may be a vacuum at a pressure of 10 Pa or less, or an atmosphere of inert gas based on nitrogen, argon or helium or reductive gas such as hydrogen or carbon monoxide. Oxygen should be avoided as promoting the conversion of diamond to non-diamond carbon, and kept off from the heat treatment process.

The heat treatment of the invention may reduce the transparency (clearness) of the crystal and, sometimes, even yield dark spots in the diamond particle for coarser sizes. They should be probably related to the occurrence of micro cracks or graphite having formed within the crystal in a conversion that is promoted in the presence of metallic inclusion. Also the diamond crystals become less lustrous with gray to black surfaces, where non-diamond carbon deposits, which comprises principally graphite as detected by X-ray diffraction. The proportion of non-diamond carbon can be considered as convenient for representing the carbonization degree and introduced as a parameter for the process control of heat treatment.

The carbonization degree, that is proportion of non-diamond carbon formed by and during the heat treatment on diamond particles, should be preferably between 0.5 and 30 % by weight. A degree less than 0.5 % is insufficient for absorbing the impulsive load or decreasing the projection heights as described below, while a 30 % or more non-diamond carbon deposit is excessively thick and decreases the abrasive efficiency.

The heat-treated diamond particles are especially adapted for a high precision cutting or polishing of works of hard substances. Conventional, or not heat-treated, diamond abrasive would yield chipping in cutting applications, or leave rather deep abrasion marks on the work surface in the polishing process, because of too high an intensity at which the abrasive particles hit the work surface. Such work damage can be significantly reduced with the diamond abrasive of the invention, in contrast. The specific proportion of non-diamond carbon deposit that intervenes between the diamond particles and the work surface moderates the load of hitting during either cutting or polishing process, while the height of the edge projections is also effectively reduced. In addition the diamond particles, due to the increased friability, become crushed under excessive loading to absorb the shock and further to spontaneously and timely regenerate minute cutting edges that enable a sustained precision machining.

The diamond particles as heat-treated, have a surface deposited with non-diamond carbon and further some carbon atoms on the surface are stabilized as terminated with hydrogen, so the particles as a whole show a decreased wettability to aqueous dispersion medium, down from the state before the treatment. Thus it is useful for the use as aqueous slurry to remove in part the deposit of non-diamond carbon and further to impart hydrophilicity to the surface of as heat-treated diamond particles, in order to achieve an improved dispersion.

For this objective, as heat-treated diamond may be subjected to a mild oxidization process in a bath of oxidizer. For this process, and also the evaluation of carbonization degree, available is strong acid or wet oxidizer, which is composed on the basis of one or more selected from such acid as sulfuric acid (H₂SO₄), nitric acid (HNO₃), perchloric acid (HClO₄). A typical process is heating at 120° C in a mixture of concentric sulfuric acid and concentric nitric acid, for example.

Such bath may further comprise potassium nitrate (KNO₃) and/or potassium permanganate (KMnO₄).

The bath temperature should be at least 100° C but not exceed 200° C, and preferably between 120° and 150° C.

This treatment removes in part the non-diamond carbon on the particle surface and further provides there either hydrophilic atom such as oxygen, or hydrophilic atomic group such as hydroxyl, carboxyl, or carbonyl, so that hydrophilicity is imparted.

Here the wording "mild (oxidation)" is employed for the purpose of designating the above described hydrophilicity-directed process, distinguishably from the similar process whereby concentrated corresponding acids are used for determining the content of non-diamond carbon by the intense, complete removal from the given sample.

The hydrophilic atom and group can be provided on the diamond by first halogenizing and then hydrolyzing its outer surface. For example a mass of as heat-treated diamond particles is placed in a chamber and heated at 300° C and chlorine gas is passed over said particles to halogenize the surface. The particles then are placed in water and collected with hydrophilic atoms or groups attached to the surface.

Another technique available for imparting hydrophilicity is based on a dry process of surface oxidization, whereby as heat-treated diamond powder is heated in an oxygen-containing gas or vapor. For this purpose the atmosphere may comprise air, oxygen, carbon dioxide or water vapor (steam) to join the hydrophilic atoms of oxygen to the surface of diamond particles. In the case of air, for example, suitable temperatures range from 450° to 500° C for an average size of 40 µm and 350° to 400° C for an average size of 6 µm, while temperatures lower by about 50° are suitable in the case of oxygen.

### Example 1

Tomei Diamond's IRM 4-8 micron-size diamond (D50 average size being 5.10 µm) powder was used as a starting material and treated by placing in a ceramic crucible and heating to either 600° or 800° C in a vacuum of 10 Pa for 3 hours.

The powder, which had a light grayish color when taken out from the chamber, was subjected to a wet oxidization by heating in a boiling mixture of sulfuric and nitric acid, in order to evaluate the non-diamond carbon deposit on the surface. A calculation based on the weight loss thus caused gave an estimation of 0.5 % and 0.8 % non-diamond carbon for the samples of 600° and 800° C, respectively.

1 weight % aqueous slurry was prepared by using either hydrophilicity treated diamond and untreated control diamond. Each slurry was tested in the polishing of a nickel disk of 3.5-inch (89 mm) diameter. The results were a polishing rate of 6.1 mg/min. with 600° heated, 6.4 mg/min. with 800° heated, and 4.8 mg/min. with untreated diamond. That is an improvement of 24 % or 30 % was achieved in machining (polishing) efficiency by subjecting the diamond to the heat treatment of the invention.

### Example 2

Similarly to the preceding example, IRM 4-8 micron-size diamond (D50 average size being 5.10 µm) was used as a starting material, which was placed in an alumina crucible and heated in nitrogen at a temperature of 1250° C for 3 hours. The diamond as taken out of the crucible had a dark gray color, which was then subjected to the wet oxidization process. Treated in a boiling mixture of sulfuric and nitric acid, the resulting loss in weight gave an estimation of 5.3 % for the non-diamond deposit on the diamond surface.

1 weight % aqueous slurry was prepared by using heat treated-diamond and, for the purpose of comparison, untreated control diamond, and tested in the polishing of a silicon disk of 4-inch (101.6 mm) diameter. The results achieved were a polishing rate of 5.1 mg/min with the diamond of the invention, as compared with 4.8 mg/min. with the control abrasive. The worked surface roughness, in terms of Ra, was of 28 Å with the treated diamond, as compared with 46 Å with the untreated diamond. Here the treatment of the invention achieved an improvement of 33 % in work surface roughness.

Each slurry was further tested in the lapping of a 20 mm diameter round rod of JIS K-10 carbide alloy. A stock removal, in terms of thickness reduction in 10 minutes, of 11.2 µm was achieved with the heat-treated diamond and 8.5 µm with the untreated control.

### Example 3

Tomei Diamond's IMM 40-60 (D50 average size being 37 µm) micron size diamond as a starting material, which was placed in a graphite crucible and heat-treated at 1350° C in hydrogen for 3 hours. The light yellow diamond grew to gray over the treatment. The non-diamond carbon deposit on the diamond was removed in a boiling mixture of sulfuric and nitric acid, and its proportion was estimated as 11 % on the basis of the weight loss.

The treated diamond of the invention and untreated control diamond were each tested for friability. Also straight type wheels were prepared by using the both diamonds, bonded with phenolic resin, and tested for comparative achievement in the polishing of carbide alloy work. The results are shown in the table below.

**Table 1**

| | Heat-treated diamond | Untreated diamond | |
|---|---|---|---|
| Friability | 36 | 30 | 20 % up in friability |
| Machining rate | 125 | 96 | 30% up in stock removal |

The process parameters are also given in the table below.

**Table 2**

| | |
|---|---|
| Wheel Type | Type 1A1, 200^{ø}×10^{W}×1.5^{t} conc. 75 |
| Peripheral Speed | 1500 m/min. |
| Table Speed | 10 m/min. |
| Cut-in Depth | 0.02 mm/pass |
| Work | JIS K10 carbide alloy |

## Claims

1. A loose mass of single crystalline minute diamond particles having a D50 average size of over 5 to 40 µm, which comprises an explicit effect of a heat treament on either crystal structure or collective properties, and further which is deposited on the surface with non-diamond carbon amounting 0.5 % or more by weight in relation to the diamond as a whole.

2. The mass of diamond particles as claimed in claim 1, in which said thermal effect is cracking in the particles.

3. The mass of diamond particles as claimed in claim 1, in which said non-diamond carbon comprises one selected from graphite, turbostratic carbon and amorphous carbon.

4. The mass of diamond particles as claimed in claim 1, in which said non-diamond carbon amounts 30 % or less, as evaluated from the weight loss caused by the removal thereof by dissolving in an oxidizer.

5. The mass of diamond particles as claimed in claim 1, in which said minute diamond particles are a synthetic product that is produced under static high pressure compression, having a size reduced by crushing.

6. The mass of diamond particles as claimed in claim 1, in which said effect is a decrease in crushing strength by 10 % or more from the strength before the treatment.

7. A method for the production of the mass of diamond particles as claimed in claim 1, comprising: heating a loose mass of diamond particles at a treatment temperature of 600° C or more in a non-oxidizing environment, said mass having a D50 average particle size of over 5 to 40 µm, and converting in part diamond surface to non-diamond carbon.

8. The method as claimed in claim 7, in which said treatment temperature is 1500° C or less.

9. The method as claimed in claim 8, in which said treatment temperature is 1000° C or more but not exceeding 1400° C.

10. The method as claimed in claim 7, in which said environment comprises an atmosphere of inert gas.

11. The method as claimed in claim 10, in which said inert gas principally comprises nitrogen, argon, or helium.

12. The method as claimed in claim 7, in which said environment comprises hydrogen or carbon monoxide.

13. The method as claimed in claim 7, in which said environment is a vacuum at a pressure of 10 Pa, approximately, or less.

14. A method for the production of the mass of diamond particles, comprising: heating a loose mass of diamond particles at a treatment temperature of 600° C or more in a non-oxidizing environment, said mass having a D50 average particle size of 5 to 40 µm, and converting in part diamond surface to non-diamond carbon, subjecting a composite of diamond and non-diamond carbon thus formed to a mild oxidization process at a mild oxidizing temperature, removing partly or completely said non-diamond carbon on the diamond surface, and providing hydrophilic atoms or atomic groups on the surface of diamond particles.

15. The method as claimed in claim 14, in which said oxidization is a wet process using a bath of oxidizer at a mild oxidizing temperature, said bath comprising one or more selected from sulfuric-, nitric-, perchloric-, and chromic acid.

16. The method as claimed in claim 15, in which said mild oxidization temperature is between 120° and 200° C.

17. The method as claimed in claim 14, in which said mild oxidization is a dry process and said composite is treated in an atmosphere of oxygen-containing gas.

18. The method as claimed in claim 17, in which said oxygen-containing gas comprises one or more selected from air, oxygen, carbon dioxide and water vapor.

19. The method as claimed in claim 17, in which said composite is heated in said atmosphere at a mild oxidizing temperature of between 350° and 500° C.
